# EUROPÄISCHE PATENTSCHRIFT

(11) **EP 2 864 974 B1**
(45) Veröffentlichungstag und Bekanntmachung des Hinweises auf die Patenterteilung: **30.11.2016**
(21) Anmeldenummer: 13719832.1
(22) Anmeldetag: 29.04.2013
(51) Int. Cl.: G08G 1/16

(54) **KOMMUNIKATIONSVORRICHTUNG UND KOMMUNIKATIONSVERFAHREN FÜR EIN FAHRZEUG**
COMMUNICATION DEVICE AND COMMUNICATION METHOD FOR A VEHICLE
DISPOSITIF DE COMMUNICATION ET PROCÉDÉ DE COMMUNICATION POUR UN VÉHICULE

(30) Priorität: 26.06.2012 DE 102012210798
(43) Veröffentlichungstag der Anmeldung: 29.04.2015
(73) Patentinhaber: Robert Bosch GmbH, 70442 Stuttgart (DE)
(72) Erfinder: HILLENBRAND, Stefan, 71696 Moeglingen (DE); DANZ, Christian, 70469 Stuttgart (DE)
(86) Internationale Anmeldenummer: PCT/EP2013/058838
(87) Internationale Veröffentlichungsnummer: WO 2014/000913

(56) Entgegenhaltungen:
- DE-A1-102007 046 319
- DE-A1-102009 028 476
- US-A1- 2011 199 199
- US-A1- 2011 234 422

## Beschreibung

Die Erfindung betrifft eine Kommunikationsvorrichtung und ein Kommunikationsverfahren für ein Fahrzeug. Die Erfindung betrifft ferner ein Computerprogramm, ein Fahrzeug sowie ein Kommunikationssystem.

### Stand der Technik

Aus der Offenlegungsschrift DE 10 2010 001 869 A1 sind ein Verfahren und eine Vorrichtung zur Warnung eines Fußgängers vor herannahenden Fahrzeugen bekannt. Hierbei umfasst die Vorrichtung eine Empfangseinrichtung für elektromagnetische Strahlung, wobei mittels der Empfangseinrichtung ein elektromagnetisches Signal empfangen wird, das von einem Fahrzeug, von dem eine Kollisionsgefahr ausgehen kann, ausgesendet wird. Der Fußgänger wird bei Erkennung einer drohenden Kollisionsgefahr mittels eines Warnsignals, das durch eine in der Vorrichtung angebrachte Warneinrichtung abgegeben wird, vor der drohenden Kollision gewarnt.

Die Offenlegungsschrift US 2011/199199 A1 zeigt ein Fußgängerwarnsystem eines Fahrzeugs. Wenn das System einen Fußgänger detektiert, sendet es ein akustisches Signal aus.

Die Offenlegungsschrift US 2011/234422 A1 zeigt analog zu der Offenlegungsschrift US 2011/199199 A1 ein entsprechendes Fußgängerwarnsystem, das bei einer Detektion eines Fußgängers ein akustisches Warnsignal aussendet.

Die Offenlegungsschrift DE 10 2009 028 476 A1 zeigt ein Verfahren zum Kennzeichnen einer Gefahrensituation im Straßenverkehr.

Die Offenlegungsschrift DE 10 2007 046 319 A1 zeigt eine Signalvorrichtung eines Kraftfahrzeugs und ein zugehöriges Signalverfahren.

### Offenbarung der Erfindung

Die der Erfindung zugrunde liegende Aufgabe kann darin gesehen werden, eine Kommunikationsvorrichtung für ein Fahrzeug anzugeben, welche eine Interaktion zwischen einem Fahrzeug und einem Umfeld des Fahrzeugs ermöglicht, sodass gefährliche Situationen vermieden werden können.

Die der Erfindung zugrundeliegende Aufgabe kann auch darin gesehen werden, ein entsprechendes Kommunikationsverfahren für ein Fahrzeug, ein entsprechendes Computerprogramm, ein entsprechendes Fahrzeug sowie ein entsprechendes Kommunikationssystem anzugeben.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird eine Kommunikationsvorrichtung für ein Fahrzeug bereitgestellt. Die Kommunikationsvorrichtung umfasst eine Erfassungseinrichtung zum Erfassen eines Umfelds des Fahrzeugs. Ferner ist eine Signalisierungseinrichtung vorgesehen. Die Kommunikationsvorrichtung umfasst ferner eine Steuerung zum Steuern der Signalisierungseinrichtung in Abhängigkeit von dem erfassten Umfeld, wobei die Signalisierungseinrichtung zum Senden eines entsprechend dem erfassten Umfeld gebildeten Erfassungssignals an das Umfeld ausgebildet ist.

Nach einem weiteren Aspekt wird ein Kommunikationsverfahren für ein Fahrzeug bereitgestellt. Eine Erfassungseinrichtung erfasst ein Umfeld des Fahrzeugs. Eine Steuerung steuert eine Signalisierungseinrichtung in Abhängigkeit von dem erfassten Umfeld, sodass die Signalisierungseinrichtung ein entsprechend dem erfassten Umfeld gebildetes Erfassungssignal an das Umfeld sendet.

Nach einem anderen Aspekt wird ein Computerprogramm bereitgestellt, welches Programmcode zur Ausführung des Kommunikationsverfahrens für ein Fahrzeug umfasst, wenn das Computerprogramm in einem Computer ausgeführt wird.

Gemäß einem weiteren Aspekt wird ein Fahrzeug umfassend die Kommunikationsvorrichtung für ein Fahrzeug bereitgestellt.

Nach noch einem anderen Aspekt wird ein Kommunikationssystem angegeben, welches die Kommunikationsvorrichtung für ein Fahrzeug und einen Empfänger zum Empfangen des gesendeten Erfassungssignals umfasst.

Dadurch, dass abhängig von dem erfassten Umfeld automatisch ein Erfassungssignal an das Umfeld des Fahrzeugs gesendet wird, ist in vorteilhafter Weise eine Interaktion zwischen dem Fahrzeug und dem Umfeld des Fahrzeugs ermöglicht. Das Umfeld des Fahrzeugs erhält insofern in vorteilhafter Weise insbesondere die Information, inwieweit oder wie genau das Fahrzeug das Umfeld erfasst hat. Personen des Umfelds des Fahrzeugs können so insbesondere in vorteilhafter Weise erkennen, ob sie vom Fahrzeug erfasst wurden. Hierfür müssen diese Personen in der Regel keine speziellen Geräte mit sich führen.

In der Regel ist es so, dass, wenn das Fahrzeug eine Person in dem Umfeld erkannt hat, diese Information bei einer weiteren Fahrzeugführung berücksichtigt wird. Dies insbesondere dann, wenn es sich bei dem Fahrzeug um ein automatisch fahrendes Fahrzeug oder um ein autonom fahrendes Fahrzeug, das heißt ohne einen aktiven Fahrzeugführer, der das Fahrzeug steuert, handelt. Da die Person erkannt hat, dass das Fahrzeug sie erfasst hat, kann die Person üblicherweise davon ausgehen, dass das Fahrzeug bei der weiteren Fahrzeugführung das Vorhandensein der Person berücksichtigt. So kann sich beispielsweise die Person in der Regel darauf verlassen, einen Fußgängerweg oder eine Straße sicher überqueren zu können.

Wenn beispielsweise die Erfassungseinrichtung das Umfeld des Fahrzeugs noch nicht erfasst hat, so wird entsprechend auch kein Erfassungssignal an das Umfeld gesendet. Das Ausbleiben bzw. nicht Vorhandensein dieses Erfassungssignals ist dann für das Umfeld, insbesondere einer Person bzw. einem Verkehrsteilnehmer, ein Zeichen dafür, dass das Fahrzeug sie noch nicht erkannt bzw. erfasst hat. Die Person bzw. der Verkehrsteilnehmer wird sich insofern üblicherweise entsprechend vorsichtiger verhalten. Mögliche Unfälle zwischen dem Fahrzeug und der Person können somit in vorteilhafter Weise vermieden werden.

Ein Erfassungssignal im Sinne der vorliegenden Erfindung ist insbesondere ein Träger der Information, dass das Umfeld erfasst wurde. Ein Erfassungssignal ist also insbesondere ein Zeichen mit der Bedeutung, dass das Umfeld erfasst wurde. Diese Information wird erfindungsgemäß mittels eines optischen Signals an das Umfeld transportiert bzw. gesendet Das erfindungsgemäße Erfassungssignal umfaßt entweder die Information ob Objekte und Personen in dem Umfeld detektiert, also erkannt, wurden oder die Information dass Objekte und Personen in dem Umfeld nicht eindeutig erkannt wurden.

Das Umfeld des Fahrzeugs weist in der Regel vorzugsweise einen oder mehrere Verkehrsteilnehmer wie beispielsweise einen Fußgänger, einen Fahrradfahrer, einen Motorradfahrer oder einen Fahrzeugfahrer eines weiteren Fahrzeugs auf. Das heißt also insbesondere, dass eine nonverbale Kommunikation zwischen dem Fahrzeug und dem Verkehrsteilnehmer bzw. den Verkehrsteilnehmern mittels des Sendens des Erfassungssignals durchgeführt wird.

Gemäß einer Ausführungsform kann vorgesehen sein, dass die Signalisierungseinrichtung eine schwenkbar angeordnete Kamera umfasst, um abhängig von dem erfassten Umfeld die Kamera zu schwenken. Die Information, dass das Umfeld erfasst wurde, wird insofern in vorteilhafter Weise mittels eines Schwenkens der Kamera an das Umfeld übertragen bzw. gesendet. Das Erfassungssignal ist hier insofern ein optisches Signal: Das Schwenken der Kamera. Für Verkehrsteilnehmer ist diese Art der Informationsübermittlung besonders intuitiv, da in der Regel ein realer Fahrer seinen Kopf in Richtung des Verkehrsteilnehmers schwenkt bzw. dreht und üblicherweise Blickkontakt aufnimmt, um dem Verkehrsteilnehmer zu signalisieren, dass der Fahrer ihn erkannt hat.

Gemäß einer anderen Ausführungsform kann vorgesehen sein, dass die Signalisierungseinrichtung einen optischen Lichtsender zum Senden von Licht mit einer Wellenlänge zwischen 380 nm und 780 nm abhängig von dem erfassten Umfeld umfasst. Das heißt also insbesondere, dass die Wellenlänge des auszusendenden Lichts abhängig vom erfassten Umfeld gewählt werden kann. Hier findet also die Übermittlung der Information, dass das Umfeld erfasst wurde, mittels eines optischen Signals, hier Licht, statt. Licht mit der vorgenannten Wellenlänge kann von Menschen in der Regel gesehen werden. Zusätzliche Empfangsgeräte sind daher nicht notwendig, wobei sie aber beispielsweise dennoch vorgesehen sein können, um ein Detektieren des Erfassungssignals zu erleichtern. Dies insbesondere dann, wenn der Verkehrsteilnehmer eine eingeschränkte Sehfähigkeit hat oder gar blind ist.

In einer Ausführungsform kann vorgesehen sein, dass die Signalisierungseinrichtung eine Fahrzeugbeleuchtungseinrichtung als optischen Sender, wie beispielsweise Scheinwerfer und/oder einen Fahrtrichtungsanzeiger, umfasst und aktiviert, um dem Umfeld, insbesondere dem Verkehrsteilnehmer, optisch anzuzeigen, dass sie das Umfeld erfasst hat.

Nach einer weiteren Ausführungsform kann beispielsweise vorgesehen sein, dass der optische Sender mehrere Male hintereinander aktiviert und deaktiviert wird analog zu einem optischen Morsen. Der optische Sender kann also insbesondere optisch morsen bzw. optische Morsesignale aussenden.

Nach einer weiteren Ausführungsform kann vorgesehen sein, dass der optische Sender kontinuierliches Licht aussendet. Dies alternativ oder zusätzlich zum Morsen, also zum Aussenden von gepulstem Licht.

Gemäß einer Ausführungsform kann vorgesehen sein, dass der optische Lichtsender eine Flüssigkristallanzeige erfasst. Eine Flüssigkristallanzeige kann auch als ein Flüssigkristallbildschirm bezeichnet werden. Im Englischen werden hierfür üblicherweise die Begriffe "Liquid Crystal Display" verwendet. Mittels einer Fiüssigkristallanzeige kann insbesondere in vorteilhafter Weise optische Muster, Text und/oder Bilder erzeugt werden, um einem Verkehrsteilnehmer genauere Informationen bezüglich der Erfassung zu übermitteln.

Gemäß einer anderen Ausführungsform kann vorzugsweise vorgesehen sein, dass der optische Lichtsender eine Leuchtdiode (auf Englisch: LED, Light Emitting Diode), insbesondere eine organische Leuchtdiode (auf Englisch: OLED, Organic Light Emitting Diode), umfasst.

In einer anderen Ausführungsform kann vorgesehen sein, dass der optische Lichtsender einen Kunststoff umfasst, welcher bei Beaufschlagung einer elektrischen Spannung seine Farbe ändern kann. Ein solcher Kunststoff kann in vorteilhafter Weise einfach auf Karrosserieteile des Fahrzeugs aufgebracht bzw. befestigt werden.

In einer Ausführungsform kann vorgesehen sein, dass der optische Lichtsender Licht mit einer Wellenlänge von > 600 nm aussendet, wenn die Erfassungseinrichtung in dem Umfeld des Fahrzeugs keine Verkehrsteilnehmer erkannt bzw. detektiert hat. Licht mit einer Wellenlänge von > 600 nm entspricht üblicherweise der Farbe rot. Dies ist in der Regel eine Warnfarbe, sodass Verkehrsteilnehmer in dem Umfeld deutlich erkennen, dass das Fahrzeug sie nicht erkannt bzw. detektiert hat. Die Verkehrsteilnehmer werden sich also üblicherweise vorsichtiger verhalten, was potentielle Unfälle vermeiden kann.

In einer weiteren Ausführungsform kann vorgesehen sein, dass der optische Lichtsender Licht mit einer Wellenlänge zwischen 565 nm und 575 nm und/oder mit einer Wellenlänge zwischen 575 nm und 595 nm aussendet, wenn die Erfassungseinrichtung zwar Objekte in dem Umfeld erkannt hat, sich aber nicht sicher ist, um welche Objekte es sich im Einzelnen handelt. Das heißt also insbesondere, dass eine Klassifikation der erkannten Objekte, um was für einen Verkehrsteilnehmers es sich handelt bzw. ob es sich bei den erkannten Objekten überhaupt um Verkehrsteilnehmer handelt, nur mit einer gewissen Wahrscheinlichkeit korrekt durchgeführt wurde. Das heißt also, dass der optische Lichtsender Licht mit der Wellenlänge zwischen 565 nm und 575 nm und/oder mit einer Wellenlänge zwischen 575 nm und 595 nm aussendet, wenn ein einer Klassifikation von detektierten Objekten zugeordneter Wahrscheinlichkeitswert kleiner ist als ein vorbestimmter Wahrscheinlichkeitswert.

Der Wellenlängenbereich zwischen 565 nm und 575 nm entspricht in der Regel der Farbe gelb. Der Wellenlängenbereich zwischen 575 nm und 595 nm entspricht in der Regel der Farbe orange. Orange und Gelb sind in der Regel ebenfalls Warnsignalfarben welche aber üblicherweise von Verkehrsteilnehmern als eine geringere Warnung verstanden werden im Vergleich zu der Warnsignalfarbe rot. Somit kann in vorteilhafter Weise einem Verkehrsteilnehmer signalisiert werden, dass er zwar erfasst wurde, aber nicht als ein Verkehrsteilnehmer klassifiziert wurde.

Gemäß einer weiteren Ausführungsform kann vorgesehen sein, dass der optische Lichtsender Licht mit einer Wellenlänge zwischen 520 nm und 565 nm aussendet, wenn die Erfassungseinrichtung ein Objekt in dem Umfeld sowohl erkannt als auch mit einer gewissen Wahrscheinlichkeit klassifiziert hat und sich so sicher ist, dass es sich bei den einzelnen Objekten um beispielsweise einen Fußgänger, einen Radfahrer oder ein anderes Fahrzeug handelt. Das heißt also, dass der optische Lichtsender Licht mit der Wellenlänge zwischen 520 nm und 565 nm aussendet, wenn ein einer Klassifikation von detektierten Objekten zugeordneter Wahrscheinlichkeitswert größer ist als ein vorbestimmter Wahrscheinlichkeitswert.

Licht mit dieser Wellenlänge, also zwischen 520 nm und 565 nm entspricht üblicherweise der Farbe grün und signalisiert in der Regel einem Verkehrsteilnehmer, dass alles in Ordnung ist, dass das Fahrzeug ihn insbesondere erkannt, korrekt klassifiziert hat und bei der weiteren Fahrzeugführung berücksichtigt. Somit kann in vorteilhafter Weise dem Verkehrsteilnehmer einfach signalisiert werden, dass er sowohl erfasst als auch korrekt klassifiziert wurde.

Nach einer weiteren Ausführungsform kann vorgesehen sein, dass die Signalisierungseinrichtung, insbesondere der optische Lichtsender, ausgebildet ist, um an einer Karosserie des Fahrzeugs bzw. an einer Oberfläche des Fahrzeugs angeordnet zu werden. Das heißt also insbesondere, dass eine Karosserie für ein Fahrzeug vorgesehen sein kann, an welcher die Signalisierungseinrichtung, insbesondere der optische Lichtsender, angeordnet ist. Das heißt also insbesondere, dass ein Fahrzeug vorgesehen sein kann, wobei an einer Karosserie des Fahrzeugs und/oder einer Oberfläche des Fahrzeugs die Signalisierungseinrichtung, vorzugsweise ein optischer Lichtsender, angeordnet ist.

In einer anderen Ausführungsform kann vorgesehen sein, dass nur Bereiche der Karosserie bzw. Oberfläche des Fahrzeugs umfassend optische Lichtsender Licht mit einer vorbestimmten Wellenlänge aussenden, die zum jeweils erkannten Verkehrsteilnehmer weisen. Dadurch ist in vorteilhafter Weise ein toter Winkel der Erfassungseinrichtung für weitere Verkehrsteilnehmer von außen einfach zu erkennen. So können also mehrere Verkehrsteilnehmer in dem Umfeld des Fahrzeugs einfach erkennen, ob nur sie erkannt wurden oder ob auch andere weitere Verkehrsteilnehmer vom Fahrzeug erkannt wurden.

Nach einer weiteren Ausführungsform können mehrere optische Lichtsender vorgesehen sein, welche insbesondere gleich oder vorzugsweise unterschiedlich gebildet sein können.

In einer weiteren Ausführungsform kann vorgesehen sein, dass die Signalisierungseinrichtung einen Schallsender zum Senden eines entsprechend dem erfassten Umfeld gewählten Schalls umfasst. Das Erfassungssignal ist hier also insbesondere eine Schallwelle.

Schall im Sinne der vorliegenden Erfindung bezeichnet insbesondere eine mechanische Welle in einem Medium, hier Luft.

In einer Ausführungsform kann vorgesehen sein, dass Schall mit einer Frequenz zwischen 16 Hz bis 20 KHz ausgesendet wird. Schall in diesem Frequenzbereich kann in der Regel von Menschen gehört werden, sodass Verkehrsteilnehmer akustisch hören können, ob sie erkannt oder ob sie nicht erkannt wurden.

In einer weiteren Ausführungsform kann vorgesehen sein, dass Schall in einem Frequenzbereich zwischen 20 kHz bis 1,6 GHz ausgesendet wird.

In einer weiteren Ausführungsform kann vorgesehen sein, dass Schall mit einer Frequenz von kleiner als 16 Hz ausgesendet wird.

Die vorgenannten Frequenzbereiche, also < 16 Hz und zwischen 20 kHz und 1,6 GHz, sind zwar in der Regel von Menschen nicht hörbar. Es kann aber vorzugsweise vorgesehen sein, dass der Empfänger des Kommunikationssystems ausgebildet ist, um Schall mit einer solchen in den vorgenannten Frequenzbereichen liegenden Frequenz zu detektieren. Daraufhin kann insbesondere vorgesehen sein, entsprechend dem detektierten Signal ein für einen Menschen wahrnehmbares Signal, insbesondere ein optisches und/oder ein akustisches und/oder ein haptisches Signal, auszugeben. Dies hat insbesondere den Vorteil, dass weitere einen solchen Empfänger nicht aufweisende Verkehrsteilnehmer nicht gestört werden, sodass nur ein Verkehrsteilnehmer des entsprechenden Empfängers die für ihn relevante Information übermittelt bekommt. Andere Verkehrsteilnehmer können insofern nicht verwirrt werden.

In einer weiteren Ausführungsform kann vorgesehen sein, dass mehrere Schallsender vorgesehen sind, welche insbesondere gleich oder vorzugsweise unterschiedlich gebildet sein können.

Gemäß einer Ausführungsform kann vorgesehen sein, dass gepulster Schall alternativ oder anstelle zu einem Dauerschallsignal ausgesendet wird analog zu einem akustischen Morsesignal.

Nach einer weiteren Ausführungsform kann vorgesehen sein, dass die Signalisierungseinrichtung einen Radiowellensender zum Senden von Radiowellen abhängig von dem erfassten Umfeld umfasst. Das Erfassungssignal ist hier insbesondere eine Radiowelle. Vorzugsweise können mehrere Radiowellensender vorgesehen sein, welche insbesondere gleich oder vorzugsweise unterschiedlich gebildet sein können.

Radiowellen im Sinne der vorliegenden Erfindung sind insbesondere elektromagnetische Wellen mit einer Wellenlänge zwischen 10 cm und 100 km. Insbesondere weisen die elektromagnetischen Wellen vorzugsweise einen Frequenzbereich von einigen Kilohertz bis etwa 3 Gigahertz auf Zwar können diese Radiowellen von einem Menschen nicht wahrgenommen werden. Allerdings kann vorzugsweise vorgesehen sein, dass der Empfänger des Kommunikationssystems entsprechend ausgebildet ist, diese Radiowellen zu empfangen. Beispielsweise kann der Empfänger von einem Mobiltelefon, also einem drahtlosen Telefon, insbesondere einem Mobilfunktelefon, umfasst sein. Das heißt also insbesondere, dass der Radiowellensender Radiowellen in einem Frequenzbereich, welcher typisch für Mobilfunkfrequenzbereiche ist, aussendet. Das heißt also insbesondere, dass dadurch in vorteilhafter Weise das Mobiltelefon des Verkehrsteilnehmers die Information empfängt, ob beispielsweise der Verkehrsteilnehmer erfasst oder nicht erfasst wurde. Das Mobiltelefon kann vorzugsweise ausgebildet sein, dem Träger, also dem Verkehrsteilnehmer optisch und/oder akustisch und/oder haptisch mitzuteilen, welche Information genau von der Kommunikationsvorrichtung, also insbesondere dem Fahrzeug an den Verkehrsteilnehmer übermittelt wurde. Das Mobiltelefon empfängt also die Radiowellen und gibt daraufhin ein optisches und/oder akustisches und/oder haptisches Signal aus bzw. stellt ein solches bereit.

In einer weiteren Ausführungsform kann vorgesehen sein, dass der Empfänger Teil eines Mobilfunknetzes ist. Beispielsweise kann der Empfänger von einem Mobilfunkmast umfasst sein. Der Mobilfunkmast kann vorzugsweise einen weiteren Sender umfassen, der die Radiowelle und/oder eine weitere Radiowelle, die abhängig von der Radiowelle gebildet wird, an das Mobiltelefon sendet. Das Vorsehen einer weiteren Radiowelle, die abhängig von der Radiowelle gebildet wird und die insofern die mittels der Radiowelle transportierte Information umfasst, ermöglicht es in vorteilhafter Weise, dass Radiowellen gewählt werden können, die von dem Mobiltelefon besonders gut empfangen werden können. Ferner ist mittels dieser indirekten Übertragung auch eine standardisierte Schnittstelle geschaffen, insofern sich ein Hersteller keine Gedanken mehr über mögliche Empfangsprobleme auf der Mobiltelefonseite machen muss. Es ist ausreichend, wenn er für eine Kommunikation zwischen Signalisierungseinrichtung und Mobilfunkmast sorgt. Das Einspeisen des Erfassungssignals in das Mobilfunknetz wird dann in der Regel vom Mobilfunknetzbetreiber übernommen, der sein eigenes Netz üblicherweise am besten kennt.

In einer anderen Ausführungsform kann vorgesehen sein, dass die Signalisierungseinrichtung eine Eingriffseinrichtung zum Eingreifen in eine Fahrzeugführung abhängig von dem erfassten Umfeld umfasst. Die Information, ob das Umfeld erfasst oder nicht erfasst wurde, kann hier also insbesondere mittels einer veränderten Fahrzeugführung übermittelt werden. Ein Verkehrsteilnehmer sieht beispielsweise diese veränderte Fahrzeugführung. Der Verkehrsteilnehmer kann vorzugsweise die veränderte Fahrzeugführung hören, beispielsweise aufgrund von Bremsgeräuschen. Das Erfassungssignal kann also vorzugsweise ein optisches und/oder ein akustisches Signal umfassen.

Eine veränderte Fahrzeugführung kann beispielsweise ein Bremsen, ein Beschleunigen und/oder eine Fahrtrichtungsänderung umfassen.

In einer Ausführungsform kann vorgesehen sein, dass bei einer Erfassung eines Verkehrsteilnehmers das Fahrzeug abgebremst wird, um dem Verkehrsteilnehmer zu signalisieren, dass er erkannt wurde.

Gemäß einer weiteren Ausführungsform kann vorgesehen sein, dass die Signalisierungseinrichtung eine schwenkbar angeordnete Kamera umfasst und bei einer Klassifikation eines umfassten Objekts des Umfelds als ein Verkehrsteilnehmer die Kamera in Richtung des Verkehrsteilnehmers schwenkt.

In einer anderen Ausführungsform kann vorgesehen sein, dass die Kamera zumindest ein Bild, insbesondere mehrere Bilder, des Verkehrsteilnehmers bildet, welches bzw. welche daraufhin überprüft wird bzw. werden, ob der Verkehrsteilnehmer in Richtung der Kamera blickt. Dadurch wird in vorteilhafter Weise ein Rückkanal geschaffen, um zu überprüfen, ob der Verkehrsteilnehmer erkannt hat, dass er selber von der Erfassungseinrichtung erfasst und erkannt wurde. Ferner kann der Rückkanal, also das Bilden von Bildern des Verkehrsteilnehmers mittels der Kamera, dafür verwendet werden, um vorzugsweise zu überprüfen, ob eine bisherige Klassifikation des Verkehrsteilnehmers korrekt durchgeführt wurde. So kann beispielweise in vorteilhafter Weise überprüft werden, ob es sich bei dem Verkehrsteilnehmer um einen Fußgänger oder einen Radfahrer handelt. Verkehrsteilnehmer können insofern in vorteilhafter Weise besser voneinander unterschieden werden. Das heißt also, dass insbesondere in einer ersten Klassifikation der Verkehrsteilnehmer als "Kein Auto" klassifiziert wurde, wobei sich die Erfassungseinrichtung nicht sicher ist, ob es sich nun um einen Fußgänger, einen Radfahrer oder beispielsweise um einen Motorradfahrer handelt. Mittels des Rückkanals kann dann in vorteilhafter Weise eine genauere Klassifikation bzw. einer verbesserte Unterscheidung bewirkt werden.

Die vorgenannte Ausführungsform mittels einer schwenkbar angeordneten Kamera ist analog zu einer nonverbalen Kommunikation zwischen einem realen Fahrzeugführer und einem außerhalb des Fahrzeugs positionierten Verkehrsteilnehmer zu sehen. Auch hier findet eine nonverbale Kommunikation dahingehend statt, dass der Fahrzeugführer den Verkehrsteilnehmer anblickt, er also seinen Kopf in Richtung des Verkehrsteilnehmers schwenkt, um ihm zu signalisieren, dass er erkannt wurde. Wenn der Verkehrsteilnehmer dies erkannt hat, so wird er ebenfalls seinen Kopf in Richtung des Fahrzeugführers schwenken, um diesen anzugucken, um ihm so zu signalisieren, dass er erkannt hat, dass der Fahrzeugführer ihn erkannt hat, also dass die Botschaft des Fahrzeugsführers angekommen ist.

Gemäß einer weiteren Ausführungsform kann vorgesehen sein, dass die Signalisierungseinrichtung ausgebildet ist, um an einem Bauteil eines Fahrzeugs angeordnet zu werden. Das heißt also insbesondere, dass ein Bauteil umfassend die Signalisierungseinrichtung vorgesehen sein kann. Das heißt also insbesondere, dass das Fahrzeug dieses Bauteil umfassend die Signalisierungseinrichtung aufweisen kann. Bei einem solchen Bauteil kann es sich beispielsweise um einen Dachrand oder eine Zierleiste für das Fahrzeug handeln. Vorzugsweise können mehrere Bauteile vorgesehen sein, welche gleich oder unterschiedlich gebildet sein können. Das heißt also insbesondere, dass beispielsweise die Signalisierungseinrichtung an dem Dachrand und/oder an der Zierleiste des Fahrzeugs angeordnet sein können. Beispielsweise kann die Signalisierungseinrichtung auch in einer Stoßstange des Fahrzeugs angeordnet sein. Bei dem Bauteil kann es sich also insofern insbesondere um eine Stoßstange handeln.

In einer anderen Ausführungsform kann vorgesehen sein, dass die Signalisierungseinrichtung ausgebildet ist, das Erfassungssignal ausschließlich in eine vorbestimmte Richtung auszusenden. Es wird also in vorteilhafter Weise ein gerichtetes Erfassungssignal abgegeben bzw. ausgesendet. Dadurch kann die Information bei mehreren Verkehrsteilnehmern nur an den Verkehrsteilnehmer übermittelt werden, welcher bezüglich einer möglichen Kollision die größte Relevanz hat. Weitere Verkehrsteilnehmer, welche sich nicht in der Gefahr einer möglichen Kollision befinden, werden so nicht gestört bzw. verwirrt.

In einer weiteren Ausführungsform kann die Erfassungsseinrichtung einen oder mehrere Sensoren zum sensorischen Erfassen des Umfelds aufweisen. Die Sensoren können beispielsweise gleich oder vorzugsweise unterschiedlich gebildet sein. Die Sensoren können beispielsweise Lidar-, Radar-, Infrarot, oder Videosensoren sein. Die Erfassungseinrichtung kann beispielsweise eine Stereo-kamera umfassen.

Die Erfindung wird im Folgenden anhand von bevorzugten Ausführungsbeispielen näher erläutert. Hierbei zeigen
Fig. 1 eine Kommunikationsvorrichtung für ein Fahrzeug,
Fig. 2 ein Ablaufdiagramm eines Kommunikationsverfahrens für ein Fahrzeug,
Fig. 3 ein Fahrzeug und
Fig. 4 ein Kommunikationssystem.

Im Folgenden können für gleiche Merkmale gleiche Bezugszeichen verwendet werden.

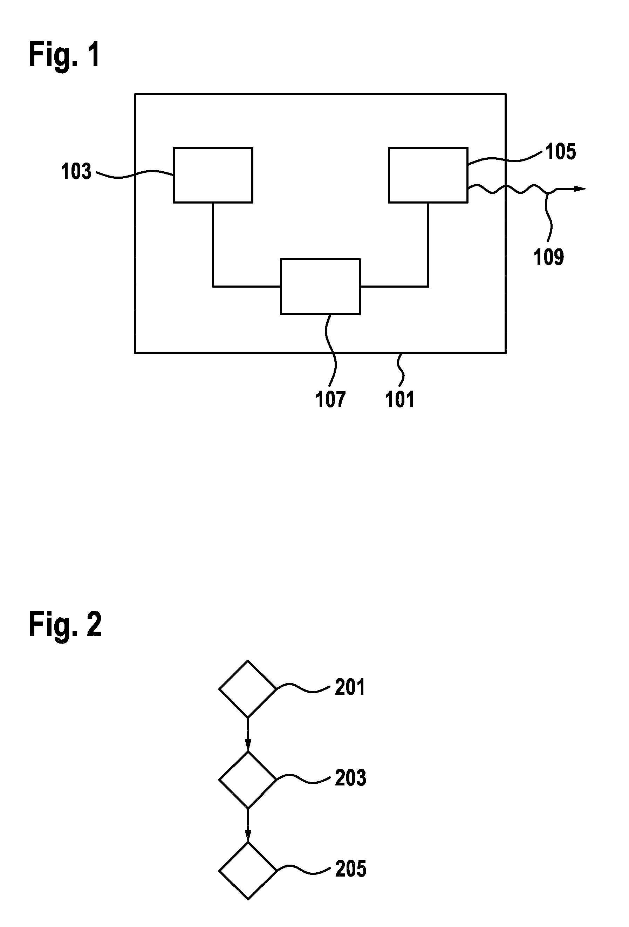

Fig. 1 zeigt eine Kommunikationsvorrichtung 101 für ein Fahrzeug (nicht gezeigt).

Die Kommunikationsvorrichtung 101 umfasst eine Erfassungseinrichtung 103 zum Erfassen eines Umfelds des Fahrzeugs. Vorzugsweise kann vorgesehen sein, dass die Erfassungseinrichtung 103 einen Sensor oder mehrere Sensoren zum sensorischen Erfassen des Umfelds umfasst. Die Erfassungseinrichtung kann beispielsweise eine Kamera, insbesondere eine Stereo-Kamera, einen Radarsensor, einen Lidarsensor und/oder Videosensoren umfassen.

Ferner umfasst die Kommunikationsvorrichtung 101 eine Signalisierungseinrichtung 105. Des Weiteren ist eine Steuerung 107 vorgesehen, welche die Signalisierungseinrichtung 105 in Abhängigkeit von dem erfassten Umfeld steuern kann. Hierbei ist die Signalisierungseinrichtung 105 zum Senden eines entsprechend dem erfassten Umfeld gebildeten Erfassungssignals 109 an das Umfeld ausgebildet.

In einer nicht gezeigten Ausführungsform kann vorgesehen sein, dass die Signalisierungseinrichtung 105 eine schwenkbar angeordnete Kamera umfasst, um abhängig von dem erfassten Umfeld die Kamera zu schwenken.

Fig. 2 zeigt ein Ablaufdiagramm eines Kommunikationsverfahrens für ein Fahrzeug.

Gemäß einem Schritt 201 erfasst eine Erfassungseinrichtung ein Umfeld des Fahrzeugs. In einem Schritt 203 steuert eine Steuerung eine Signalisierungseinrichtung in Abhängigkeit von dem erfassten Umfeld, sodass gemäß einem Schritt 205 die Signalisierungseinrichtung ein entsprechend dem erfassten Umfeld gebildetes Erfassungssignal an das Umfeld sendet.

In einer nicht gezeigten Ausführungsform kann vorgesehen sein, dass die Signalisierungseinrichtung eine schwenkbar angeordnete Kamera umfasst und bei einer Klassifikation eines erfassten Objekts des Umfelds als ein Verkehrsteilnehmer die Kamera in Richtung des Verkehrsteilnehmers schwenkt.

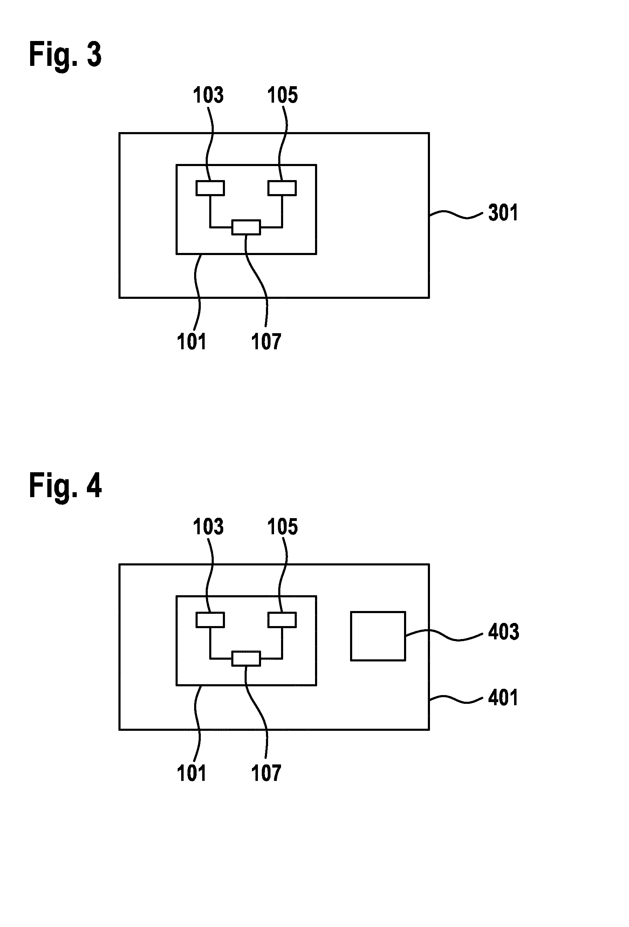

Fig. 3 zeigt ein Fahrzeug 301.

Das Fahrzeug 301 umfasst die Kommunikationsvorrichtung 101 gemäß Fig. 1.

Somit ist es in vorteilhafter Weise ermöglicht, dass eine nonverbale Kommunikation zwischen dem Fahrzeug 301 und Verkehrsteilnehmern automatisch stattfinden kann. Insbesondere wenn es sich bei dem Fahrzeug 301 um ein autonom fahrendes Fahrzeug handelt, also um ein Fahrzeug ohne einen aktiven Fahrzeugführer, kann einem Verkehrsteilnehmer trotzdem mitgeteilt werden, ob das Fahrzeug den Verkehrsteilnehmer erkannt hat. Der Verkehrsteilnehmer kann sich auf diese Situation entsprechend einstellen, wodurch in vorteilhafter Weise Unfälle vermieden werden können. Durch die nonverbale Kommunikation zwischen dem Fahrzeug 301 und dem Verkehrsteilnehmer wird somit in vorteilhafter Weise eine Verkehrssicherheit erhöht.

Insbesondere wenn die Kommunikationsvorrichtung eine schwenkbar angeordnete Kamera umfasst, wird in vorteilhafter Weise ein Blickkontakt seitens des Fahrzeugs mit dem Verkehrsteilnehmer analog zu einem Blickkontakt eines realen Fahrzeugführers mit dem Verkehrsteilnehmer simuliert. Der Verkehrsteilnehmer bekommt somit in vorteilhafter Weise insbesondere die Information, dass er von dem Fahrzeug 301 nicht übersehen wurde.

Fig. 4 zeigt ein Kommunikationssystem 401.

Das Kommunikationssystem 401 umfasst die Kommunikationsvorrichtung 101 und einen Empfänger 403 zum Empfangen des gesendeten Erfassungssignals.

Bei dem Empfänger 403 kann es sich beispielsweise um ein Mobiltelefon handeln. Üblicherweise trägt der Verkehrsteilnehmer den Empfänger 403, sodass hierüber eine Kommunikation zwischen der Kommunikationsvorrichtung 101 und dem Verkehrsteilnehmer ermöglicht ist.

In einer nicht gezeigten Ausführungsform kann vorgesehen sein, dass der Empfänger ausgebildet ist, Radiowellen, Schallwellen und/oder Licht mit einer Wellenlänge zwischen 380 nm und 780 nm zu empfangen.

Zusammenfassend umfasst die Erfindung insbesondere den Gedanken, dass ein automatisch oder autonom, also ohne einen aktiven Fahrzeugführer, fahrendes Fahrzeug anderen Verkehrsteilnehmern mitteilt, beispielsweise über einen simulierten Blickkontakt mittels einer Kamera und/oder mittels Aussenden von Licht, Schall und/oder Radiowellen, ob es diese erkannt hat und/oder bei seiner Bewegungsplanung, also der weiteren Fahrzeugführung, entsprechend, also insbesondere unfallvermeidend, berücksichtigt. Bleibt diese Bestätigung für die Verkehrsteilnehmer aus, so können die Verkehrsteilnehmer in der Regel davon ausgehen, dass sie noch nicht von dem Fahrzeug erkannt worden sind und werden sich entsprechend vorsichtiger verhalten. So kann - trotz des Fehlers in der Wahrnehmung bzw. Erfassung des automatisch oder autonom fahrenden Fahrzeugs - in vorteilhafter Weise eine Kollision vermieden werden.

## Patentansprüche

1. Kommunikationsvorrichtung (101) für ein Fahrzeug (301), mit einer Erfassungseinrichtung (103) zum Erfassen eines Umfelds des Fahrzeugs (301), mit einer Signalisierungseinrichtung (105), mit einer Steuerung (107) zum Steuern der Signalisierungseinrichtung (105) in Abhängigkeit von dem erfassten Umfeld, wobei die Signalisierungseinrichtung (105) zum Senden eines entsprechend dem erfassten Umfeld gebildeten optischen Erfassungssignals (109) an das Umfeld ausgebildet ist, **dadurch gekennzeichnet, dass** das Erfassungssignal entweder die Information umfasst, ob Objekte und Personen in dem Umfeld erkannt wurden, oder die Information umfasst, dass Objekte und Personen in dem Umfeld nicht eindeutig erkannt wurden.

2. Kommunikationsvorrichtung (101) nach Anspruch 1, wobei die Signalisierungseinrichtung (105) eine schwenkbar angeordnete Kamera umfasst, um abhängig von dem erfassten Umfeld die Kamera zu schwenken.

3. Kommunikationsvorrichtung (101) nach Anspruch 1 oder 2, wobei die Signalisierungseinrichtung (105) einen optischen Lichtsender zum Senden von Licht mit einer Wellenlänge zwischen 380 nm und 780 nm abhängig von dem erfassten Umfeld umfasst.

4. Kommunikationsvorrichtung (101) nach einem der vorherigen Ansprüche, wobei die Signalisierungseinrichtung (105) eine Eingriffseinrichtung zum Eingreifen in eine Fahrzeugführung abhängig von dem erfassten Umfeld umfasst.

5. Kommunikationsverfahren für ein Fahrzeug (301), wobei eine Erfassungseinrichtung (103) ein Umfeld des Fahrzeugs (301) erfasst (201), eine Steuerung (107) eine Signalisierungseinrichtung (105) in Abhängigkeit von dem erfassten Umfeld steuert (203), so dass die Signalisierungseinrichtung (105) ein entsprechend dem erfassten Umfeld gebildetes, optisches Erfassungssignal (109) an das Umfeld sendet (205), **dadurch gekennzeichnet, dass** das Erfassungssignal entweder die Information umfasst, ob Objekte und Personen in dem Umfeld erkannt wurden oder die Information umfasst, dass Objekte und Personen in dem Umfeld nicht eindeutig erkannt wurden.

6. Kommunikationsverfahren nach Anspruch 5, wobei die Signalisierungseinrichtung (105) eine schwenkbar angeordnete Kamera umfasst und bei einer Klassifikation eines erfassten Objekts des Umfelds als ein Verkehrsteilnehmer die Kamera in Richtung des Verkehrsteilnehmers schwenkt.

7. Kommunikationsverfahren nach Anspruch 6, wobei die Kamera zumindest ein Bild des Verkehrsteilnehmers bildet, welches daraufhin überprüft wird, ob der Verkehrsteilnehmer in Richtung der Kamera blickt.

8. Computerprogramm, umfassend Programmcode zur Ausführung des Kommunikationsverfahrens nach einem der Ansprüche 5 bis 7, wenn das Computerprogramm in einem Computer ausgeführt wird.

9. Fahrzeug (301), umfassend eine Kommunikationsvorrichtung (101) nach einem der Ansprüche 1 bis 4.

10. Kommunikationssystem (401), umfassend eine Kommunikationsvorrichtung (101) nach einem der Ansprüche 1 bis 4 und einen Empfänger (403) zum Empfangen des gesendeten Erfassungssignals.

## Claims

1. Communication apparatus (101) for a vehicle (301), having a capture device (103) for capturing an environment of the vehicle (301), having a signalling device (105), having a controller (107) for controlling the signalling device (105) on the basis of the captured environment, wherein the signalling device (105) is designed to send an optical capture signal (109) formed in accordance with the captured environment to the environment, **characterized in that** the capture signal either comprises the information concerning whether objects and persons have been identified in the environment or comprises the information that objects and persons have not been explicitly identified in the environment.

2. Communication apparatus (101) according to Claim 1, wherein the signalling device (105) comprises a swivelably arranged camera in order to swivel the camera on the basis of the captured environment.

3. Communication apparatus (101) according to Claim 1 or 2, wherein the signalling device (105) comprises an optical light transmitter for sending light having a wavelength of between 380 nm and 780 nm on the basis of the captured environment.

4. Communication apparatus (101) according to one of the preceding claims, wherein the signalling device (105) comprises an intervention device for intervening in a vehicle guidance on the basis of the captured environment.

5. Communication method for a vehicle (301), wherein a capture device (103) captures (201) an environment of the vehicle (301), a controller (107) controls a signalling device (105) on the basis of the captured environment (203), so that the signalling device (105) sends (205) an optical capture signal (109) formed in accordance with the captured environment to the environment, **characterized in that** the capture signal either comprises the information concerning whether objects and persons have been identified in the environment or comprises the information that objects and persons have not been explicitly identified in the environment.

6. Communication method according to Claim 5, wherein the signalling device (105) comprises a swivelably arranged camera and when a captured object from the environment is classified as a road user, the camera swivels in the direction of the road user.

7. Communication method according to Claim 6, wherein the camera forms at least one image of the road user that is then checked to determine whether the road user looks in the direction of the camera.

8. Computer program, comprising program code for performing the communication method according to one of Claims 5 to 7 when the computer program is executed in a computer.

9. Vehicle (301), comprising a communication apparatus (101) according to one of Claims 1 to 4.

10. Communication system (401) comprising a communication apparatus (101) according to one of Claims 1 to 4 and a receiver (403) for receiving the sent capture signal.

## Revendications

1. Dispositif de communication (101) destiné à un véhicule (301), comprenant un moyen de détection (103) destiné à détecter un environnement du véhicule (301), un moyen de signalisation (105), une unité de commande (107) destinée à commander le moyen de signalisation (105) en fonction de l'environnement détecté, dans lequel le moyen de signalisation (105) est conçu pour émettre vers l'environnement un signal de détection optique (109) formé d'une manière qui correspond à l'environnement détecté, **caractérisé en ce que** le signal de détection comprend soit une information indiquant si des objets et des personnes ont été détectés dans l'environnement, soit une information indiquant que des objets ou des personnes n'ont pas été clairement détectés dans l'environnement.

2. Dispositif de communication (101) selon la revendication 1, dans lequel le moyen de signalisation (105) comprend une caméra agencée de manière pivotante afin de faire pivoter la caméra en fonction de l'environnement détecté.

3. Dispositif de communication (101) selon la revendication 1 ou 2, dans lequel le moyen de signalisation (105) comprend un émetteur optique de lumière destiné à émettre une lumière ayant une longueur d'onde comprise entre 380 nm et 780 nm en fonction de l'environnement détecté.

4. Dispositif de communication (101) selon l'une quelconque des revendications précédentes, dans lequel le moyen de signalisation (105) comprend un moyen d'accès destiné à accéder à un système de conduite du véhicule en fonction de l'environnement détecté.

5. Procédé de communication destiné à un véhicule (301), dans lequel un moyen de détection (103) détecte (201) un environnement du véhicule (301), une unité de commande (107) commande (203) un moyen de signalisation (105) en fonction de l'environnement détecté de manière à ce que le moyen de signalisation (105) émette (205) vers l'environnement un signal de détection optique (109) formé d'une manière qui correspond à l'environnement détecté, **caractérisé en ce que** le signal de détection comprend soit une information indiquant si des objets et des personnes ont été détectés dans l'environnement, soit une information indiquant que des objets ou des personnes n'ont pas été clairement détectés dans l'environnement.

6. Procédé de communication selon la revendication 5, dans lequel le moyen de signalisation (105) comprend une caméra agencée de manière pivotante et dans lequel, lors d'une classification d'un objet de l'environnement détecté comme étant un usager de la route, la caméra pivote dans la direction de l'usager de la route.

7. Procédé de communication selon la revendication 6, dans lequel la caméra forme au moins une image de l'usager de la route, sur la base de laquelle il est vérifié si l'usager de la route regarde dans la direction de la caméra.

8. Programme d'ordinateur comprenant un code de programme destiné à mettre en oeuvre le procédé de communication selon l'une quelconque des revendications 5 à 7, lorsque le programme d'ordinateur est exécuté sur un ordinateur.

9. Véhicule (301), comprenant un dispositif de communication (101) selon l'une quelconque des revendications 1 à 4.

10. Système de communication (401), comprenant un dispositif de communication (101) selon l'une quelconque des revendications 1 à 4 et un récepteur (403) destiné à recevoir le signal de détection émis.
